# EUROPEAN PATENT APPLICATION

(11) **EP 1 138 718 A1**
(43) Date of publication of application: **04.10.2001**
(21) Application number: 99947859.7
(22) Date of filing: 12.10.1999
(51) Int. Cl.: C08L 27/12, C08J 3/24, C08L 71/00

(54) **AQUEOUS COMPOSITION FOR VULCANIZATION OF FLUORO RUBBER AND ARTICLE COATED WITH FLUORO RUBBER**

(30) Priority: 13.10.1998 JP 29064298
(71) Applicant: Daikin Industries, Ltd., Osaka-shi, Osaka 530-8323 (JP)
(72) Inventor: TOMIHASHI, Nobuyuki,Yodogawa Works of Daikin Indus, Osaka 566-8585 (JP); OGITA, Koichiro,Yodogawa Works of Daikin Industrie, Osaka 566-8585 (JP); TERASAKA, Kiyotaro,Yodogawa Works of Daikin Indust, Osaka 566-8585 (JP); NAKATANI, Yasukazu,Yodogawa Works of Daikin Indust, Osaka 566-8585 (JP)
(74) Representative: HOFFMANN - EITLE
(86) International application number: JP9905612
(87) International publication number: WO0022041

(57) **Abstract**

A one-fluid type aqueous curing composition of a fluoroelastomer comprising water, a fluoroelastomer at least a part of terminal groups of which are non-functional groups, and a curing agent. This composition has a long pot-life and provides a cured film with a high strength while it contains the fluoroelastomer at a high solid content. An article coated with a coating layer formed from this aqueous curing composition, in particular, the rolls of office automation equipment, can solve the drawbacks of articles coated with a film formed from a conventional one-liquid type aqueous curing composition of a fluoroelastomer, for example, insufficient strength of the coating layer.

## Description

### FIELD OF THE INVENITON

The present invention relates to an aqueous curing composition of a fluoroelastomer and an article coated with a fluoroelastomer. In particular, the present invention relates an aqueous curing composition comprising a specific fluoroelastomer, and an article coated with a coating layer formed from such a composition.

### BACKGROUND ART

Fluoroelastomer coating compositions are widely used as industrial materials with being coated on or impregnated in fabric, fibers, metals, plastics, rubbers and other various substrates by making use of good heat resistance, weather resistance, oil resistance, solvent resistance and chemical resistance of the fluoroelastomers.

Among them, recently aqueous coating compositions, which are friendly to environment, are desired. For example, a two-fluid type coating composition is proposed in JP-B-58-53671, etc.

When the handling of the composition is taken into account, a one-fluid type fluoroelastomer coating composition is more preferable than the two-fluid type one. However, it is not easy to improve the storage stability of the one-fluid type coating composition, and thus it is difficult to achieve the film strength and the storage stability at the same time. That is, when the fluoroelastomer is contained in the composition at a high solid content to increase the film strength, the storage stability of the composition decreases. When the solid content of the fluoroelastomer is decreased to improve the storage stability, the film strength tends to be less than the film formed from the two-fluid type coating composition. Accordingly, the film formed from the one-fluid type coating composition of the fluoroelastomer having practically acceptable storage stability has insufficient strength when it is used as the coating film of rolls which are used in office automation (OA) equipment (e.g. copying machine, printers, etc.).

The inventors found an aqueous curing composition of a fluoroelastomer comprising an aqueous fluoroelastomer dispersion and a basic polyol curing agent and filed a patent application (Japanese Patent Application No. 10-151130). However, the further improvement of the film strength and storage stability is desired.

In the case of a non-aqueous fluoroelastomer composition, it is known to use a fluoroelastomer having a non-functional terminal group at the end of the rubber molecule to achieve a high curing rate, in particular, good flowability and an effective cured state (cf. JP-B-57-27913 and WO96/17876).

However, an aqueous coating composition comprising a fluoroelastomer having a non-functional terminal group at the end of the rubber molecule.

### DISCLOSURE OF THE INVENTION

One object of the present invention is to provide a one-fluid type aqueous curing composition of a fluoroelastomer, which has a long pot-life and provide a cured film with a high strength while it contains the fluoroelastomer at a high solid content.

Another object of the present invention is to provide an article coated with a fluoroelastomer, which can solve the above drawbacks of the articles coated with a film formed from the conventional aqueous curing composition of a fluoroelastomer, in particular, the rolls of the office automation equipment.

To achieve the above objects, the present invention provides an aqueous curing composition of a fluoroelastomer comprising water, a fluoroelastomer at least a part of terminal groups of which are non-functional groups, a curing agent, and optionally at least one polymer component selected from the group consisting of fluororesins and terminal-modified perfluoropolyethers, and an article at least a part of the surface of which is coated with a coating layer formed from such an aqueous curing composition of a fluoroelastomer.

### DETAILED DESCRIPTION OF THE INVENTION

Hereinafter, the components contained in the composition of the present invention will be explained.

### (A) Fluoroelastomer

The fluoroelastomer is usually supplied in the form of an aqueous dispersion. The aqueous dispersion of the fluoroelastomer is prepared by dispersing a fluorine-containing elastomeric copolymer (fluoroelastomer) in water at a concentration of 10 to 75 % by weight in the presence of a surfactant (e.g. polyoxyethylene alkyl ether, polyoxyethylene alkylphenyl ether, alkyl sulfonate salts, etc.).

The fluorine-containing elastomeric copolymer is a fluorine-containing copolymer containing repeating units represented by -CH₂- in the backbones. One typical example of such a copolymer is a fluorine-containing elastic copolymer comprising vinylidene fluoride. Examples of such copolymer are copolymers comprising at least one repeating unit selected from the group consisting of -CF₂-CH₂-, -CH₂-CH₂- and -CH₂-CH(CH₃)-, and at least one repeating unit selected from the group consisting of -CF₂-CF(CF₃)-, -CF₂-CF₂- and -CF₂-CF(ORf)- in which Rf is a fluoroalkyl group having 1 to 6 carbon atoms.

Specific examples of such copolymers include vinylidene fluoride-hexafluoropropylene copolymers, vinylidene fluoride-tetrafluoroethylene-hexafluoropropylene copolymers, ethylene-hexafluoropropylene copolymers, tetrafluoroethylene-propylene copolymers, etc. Among them, the vinylidene fluoride copolymers are preferable from the viewpoint of their crosslinkability.

Such fluorine-containing elastomeric copolymers are commercially distributed under the trade name of "DAIEL® " (available from Daikin Industries, Ltd.), "VITONE FLOME® " (available from E. I. duPont), "AFLAS® " (available from ASAHI GLASS Co., Ltd.), etc.

### Non-functional group

In general, the fluorine-containing elastomeric copolymer is prepared by polymerizing monomers in an aqueous medium using a water-soluble peroxide (e.g. ammonium persulfate, potassium persulfate, etc.) as a polymerization initiator. The copolymer prepared by such a method contains a terminal functional group such as -SO₃H and -COOH or their salts, or -COF.

The copolymer used in the present invention can be prepared by introducing a non-functional group as the terminal group of the molecule using a chain transfer agent (e.g. hydrocarbons, alcohols, ethers, organic halides, etc.), an oil-soluble peroxide (e.g. dialkyl peroxycarbonates such as diisopropyl peroxydicarbonate, di-sec.-butyl peroxydicarbonate, etc,; peroxyesters such as tert.-butyl peroxyisobutyrate, tert.-butyl peroxypivalate, etc.; dialkyl peroxides such as di-tert.-butyl peroxide, etc.), and the like.

Examples of the non-functional group include the following groups:
a group of the formula:

-CR¹R²R³

wherein R¹, R² and R³ represent independently each other a hydrogen atom, a halogen atom, an alkyl group having 1 to 5 carbon atoms or a perfluoroalkyl group having 1 to 5 carbon atoms, and
a group of the formula:

-COOR⁴

wherein R⁴ is an alkyl group having 1 to 5. carbon atoms.

Specific but unlimited examples of the non-functional group include -CFH₂, -CF₂H, -CF₃, -CF₂Cl, -CFCl₂, -CH₃, -C₂H₅, -C₃H₇, -C₄H₉, -C₅H₁₁, -COOCH₃, -COOC₂H₅, -COOC₃H₇, etc.

The storage stability of the aqueous composition deteriorates, when the percentage of the non-functional groups in the terminal groups at the molecule ends of the copolymer is low. A surface charge density of particles may be used as a criterion indicating the percentage of the non-functional groups in the terminal groups at the molecule ends of the copolymer. The surface charge density can be measured with conductometeric titration after dialyzing the aqueous dispersion of the fluoroelastomer at least one month.

The surface charge density of the particles is about 10 x 10⁻⁶ C/cm² in the case of an aqueous dispersion of a fluoroelastomer which is prepared using the water-soluble peroxide only but neither chain-transfer agent nor oil-soluble peroxide. When the monomers are polymerized using a chain-transfer agent or an oil-soluble peroxide, the surface charge density of the particles in the aqueous dispersion of the fluoroelastomer obtained is less than 10 x 10⁻⁶ C/cm². The aqueous composition has good storage stability when it is prepared using the fluoroelastomer having a surface charge density of the particles of 9.6 x 10⁻⁶ C/cm² or less, preferably 9.0 x 10⁻⁶ C/cm² or less.

### (B) Curing agent and curing accelerator

The curing agent to be contained in the aqueous curing composition of the present invention may be either a conventional diamine curing agent or a conventional polyol curing agent.

Examples of the diamine curing agent include an aminosilane compound of the formula: 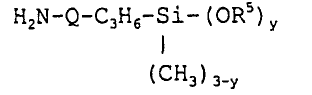 wherein R⁵ is a methyl group or an ethyl group, Q is a single bond, -C₂H₄NH-, -CONH- or -C₂H₄NH-C₂H₄NH-NH-, and y is 2 or 3, or its partially or completely hydrolyzed products, and a polyaminosiloxane compound of the formula: 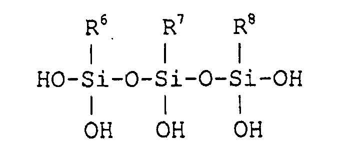 wherein R⁶, R⁷ and R⁸ represent independently each other a hydrogen atom, an alkyl group having 1 to 6 carbon atom, an amino group, a polyamino group, or an alkyl group having 1 to 6 carbon group at least one hydrogen atom of which is replaced with an amino group or a polyamino group provided that at least two of R⁶, R⁷ and R⁸ have amino groups or at least one of R⁶, R⁷ and R⁸ has a polyamino group.

The polyol curing agent used in the present invention may be a compounds or a polymer having at least two hydroxyl groups, in particular, phenolic hydroxyl groups in a molecule, and having a curing capability. Specific examples of polyol curing agents include salts of basic compounds with phenol compounds such as 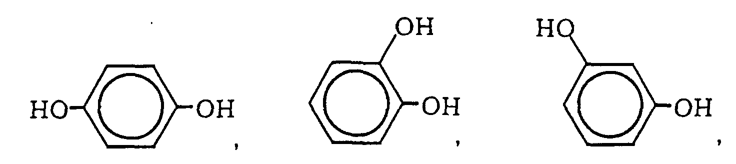 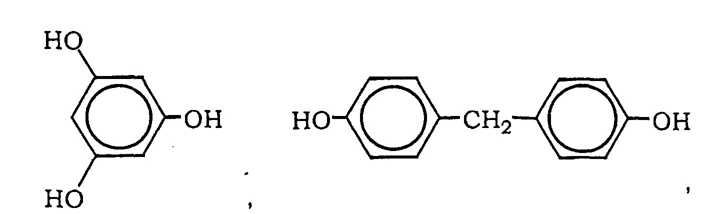 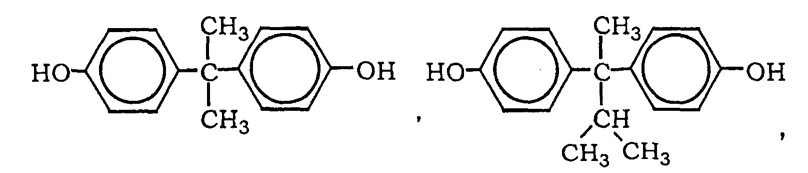 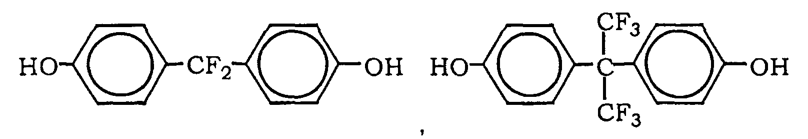 and polyphenols represented by the formula: 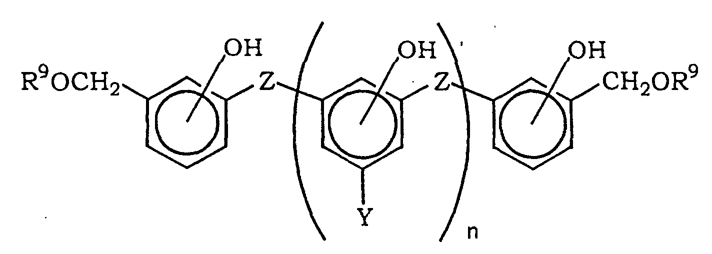 wherein Y is a hydrogen atom, a halogen atom, -R⁹, -CH₂OR⁹ or -OR⁹ in which R⁹ is an alkyl group having 1 to 4 carbon atoms, Z is -CH₂- or -CH₂OCH₂-, and n is an integer of 0 to 100.

Examples of the basic compounds include ammonium salts, tertiary amines, phosphonium salts, alkaline metal or alkaline earth metal salts, etc.

Specific examples of the ammonium salts include trimethylbenzylammonium salt, triethylbenzylammonium salt, dimethyldecylbenzylammonium salt, triethylbenzylammonium salt, myristylbenzyldimethylammonium salt, dodecyltrimethylammonium salt, dimethyltetradecylbenzylammonium salt, trimethyltetradecylammonium salt, coconut-trimethylammonium salt, stearyltrimethylammonium salt, distearyldimethylammonium salt, tetrabutylammonium hydroxide, 1,4-phenylenedimethylenebistrimethylammonium salt, 1,4-phenylenedimethylenebistriethylammonium salt, ethylenebistriethylammonium dibromide, etc.

Examples of the tertiary amines include 1,8-diaza-bicyclo[5.4.0]-undecene-7, 8-methyl-1,8-diaza-bicylo[5.4.0]-undecene-7, 8-propyl-1,8-diaza-bicylo [5.4.0]-undecene-7, 8-dodecyl-1,8-diaza-bicylo[5.4.0]-undecene-7, 8-eicosyl-1,8-diaza-bicylo[5.4.0]-undecene-7, 8-tetracosyl-1,8-diaza-bicylo[5.4.0]-undecene-7, 8-benzyl-1,8-diaza-bicylo[5.4.0]-undecene-7, 8-phenethyl-1,8-diaza-bicylo[5.4.0]-undecene-7, 8-(3-phenylpropyl)-1,8-diaza-bicylo[5.4.0]-undecene-7, trimethylamine, triethylamine, tri-n-propylamine, tri-n-butylamine, triisobutylamine, methyldiethylamine, dimethylethylamine, dimethyl-n-propylamine, dimethyl-n-butylamine, dimethylisobutylamine, dimethylisopropylamine, dimethyl-sec.-butylamine, dimethyl-tert.-butylamine, triallylamine, diallylmethylamine, allyldimethylamine, benzyldimethylamine, benzyldiethylamine, N-allylpiperidine, N-ethylpiperidine, N-butylpiperidine, N-methylpyrolidine, N-cyclohexylpyrolidine, N-n-butylpyrolidine, N-ethylpyrolidine, N-benzylpyrolidine, 2,4,6-trimethylpyridine, etc.

Examples of the phosphonium salts include benzyltriphenylphosphonium, methyltriphenylphosphonium, 2,4-dichlorobenzyltriphenylphosphonium, 4-methylbenzyltriphenylphosphonium, 4-chlorobenzyltriphenylphosphonium, m-trifluoromethylbenzyltriphenylphosphonium, 2-cyanobenzyltriphenylphosphonium, α-carbethoxylbenzyltriphenylphosphonium, diphenylmethyltriphenylphosphonium, 1-naphthylmethyltriphenylphosphonium, carbethoxymethyltriphenylphosphonium, methoxymethyltriphenylphosphonium, allyloxymethyltriphenylphosphonium, 1-carbethoxyethyltriphenylphosphonium, isobutyltriphenylphosphonium, 4-cyanobutyltriphenylphosphonium, 2-pentyltriphenylphosphonium, allyltriphenylphosphonium, tetraphenylphosphonium, methyltrioctylphysphonium, benzyltrioctylphosphonium, methoxyethoxyethyl-trioctylphosphonium, butyltrioctylphosphonium, m-trifluoromethylbenzyltrioctylphosphonium, 2,2,3,3-tetrafluoropropyltrioctylphosphonium, 2,2,3,3,4,4,5,5-octafluoropentyltrioctylphosphonium, tetraoctylphosphonium, tetrabutylphosphonium, etc.

Examples of the alkali metals include lithium, sodium, potassium, etc.

Examples of the alkaline earth metals include beryllium, magnesium, calcium, barium, etc.

Among them, the salts of hydroquinone, bisphenol A, bisphenol AF and the resol type polyphenols with the ammonium salts or the tertiary amines are preferable from the viewpoint of the properties of the coating film. Hydroquinone, bisphenol A, bisphenol AF and the resol type polyphenols have particularly good curing properties, and the ammonium salts and tertiary amines do not leave decomposition residues in the coating film unlike the alkali metals or the alkaline earth metals. However, bisphenol A is less preferable from the viewpoint of environment, since it is doubted to be an incretion-disturbing chemical substance.

When the polyol curing agent is used, the following compounds may be compounded as the optional curing accelerators:

### (a) Quaternary ammonium salts

A quaternary ammonium salt of the formula:

NR¹⁰₄X or R¹⁰₃N-R¹¹-NR¹⁰₃·2X

wherein X is an acid radical or a hydroxyl group; R¹⁰ groups are the same or different and represent an alkyl group having 1 to 20 carbon atoms, a halogenated alkyl group having 1 to 20 carbon atoms or an aryl group having 6 to 20 carbon atoms, provided that two or more R¹⁰ groups may together form a carbocyclic group or a heterocyclic group; R¹¹ is an alkylene group having 2 to 21 carbon atom or a phenylenedialkylene group having 8 to 12 carbon atoms.

Examples of acid radicals include halides, sulfate, sulfite, bisulfite, thiosulfate, sulfide, polysulfide, hydrogen sulfide, thiocyanate, carbonate, bicarbonate, nitrate, carboxylate, borate, phosphate, biphosphate, phosphite, perchlorate, bifluoride, arsenate, ferricyanide, ferrocyanide, molybdate, selenate, selenite, uranate, tungstate, etc.

Specific examples of quaternary ammonium salts include alkyl and aralkyl quaternary ammonium salts (e.g. trimethylbenzylammonium chloride, triethylbenzylammonium chloride, dimethyldecylbenzylammonium chloride, triethylbenzylammonium chloride, myristylbenzyldimethylammonium chloride, dodecyltrimethylammonium chloride, dimethyltetradecylbenzylammonium chloride, trimethyltetradecylammonium chloride, coconut-trimethylammonium chloride, stearyltrimethylammonium chloride, distearyldimethylammonium chloride, tetrabutylammonium hydroxide, 1,4-phenylenedimethylene-bistrimethylammonium dichloride, 1,4-phenylenedimethylene-bistriethylammonium dichloride, ethylenebistriethylammonium dibromide, etc.), and quaternary 1,8-diaza-bicyclo[5.4.0]-7-undecenium salts (e.g. 8-methyl-1,8-diaza-bicylo[5.4.0]-7-undecenium chloride, 8-methyl-1,8-diaza-bicylo[5.4.0]-7-undecenium iodide, 8-methyl-1,8-diaza-bicylo[5.4.0]-7-undecenium hydroxide, 8-methyl-1,8-diaza-bicylo[5.4.0]-7-undecenium methylsulfate, 8-methyl-1,8-diaza-bicylo[5.4.0]-7-undecenium bromide, 8-propyl-1,8-diaza-bicylo[5.4.0]-7-undecenium bromide, 8-dodecyl-1,8-diaza-bicylo[5.4.0]-7-undecenium chloride, 8-dodecyl-1,8-diaza-bicylo[5.4.0]-7-undecenium hydroxide, 8-eicosyl-1,8-diaza-bicylo[5.4.0]-7-undecenium chloride, 8-tetracosyl-1,8-diaza-bicylo[5.4.0]-7-undecenium chloride, 8-benzyl-1,8-diaza-bicylo[5.4.0]-7-undecenium chloride, 8-benzyl-1,8-diaza-bicylo[5.4.0]-7-undecenium hydroxide, 8-phenethyl-1,8-diaza-bicylo[5.4.0]-7-undecenium chloride, 8-(3-phenylpropyl)-1,8-diaza-bicylo [5.4.0] -7-undecenium chloride, etc.).

### (b) Quaternary salts of tertiary amines with inorganic or organic acids

A tertiary amine of the formula:

NR¹⁰₃ or R¹⁰₂N-R¹¹-NR¹⁰₂

Examples of the tertiary amines include trimethylamine, triethylamine, tri-n-propylamine, tri-n-butylamine, triisobutylamine, methyldiethylamine, dimethylethylamine, dimethyl-n-propylamine, dimethyl-n-butylamine, dimethylisobutylamine, dimethylisopropylamine, dimethyl-sec.-butylamine, dimethyl-tert.-butylamine, triallylamine, diallylmethylamine, allyldimethylamine, benzyldimethylamine, benzyldiethylamine, N-allylpiperidine, N-ethylpiperidine, N-butylpiperidine, N-methylpyrolidine, N-cyclohexylpyrolidine, N-n-butylpyrolidine, N-ethylpyrolidine, N-benzylpyrolidine, 2,4,6-trimethylpyridine, etc.

Examples of the inorganic or organic acids which form the quaternary salts include the following acids:
HCl, HBr, HF, (C₂H₅)₃NH⁺Cl⁻, (C₂H₅)₃NH⁺NO₃⁻, 2(C₂H₅)₃NH⁺SO₄²⁻, 2 (C₂H₅)₃NH⁺CO₃²⁻, (C₂H₅)₃NH⁺R¹²O⁻, (C₂H₅)₃NH⁺R¹²COO⁻, (C₄H₉)₃NH⁺Cl⁻, (C₄H₉)₃NH⁺NO₃⁻, 2 (C₄H₉)₃NH⁺SO₄²⁻, 2 (C₄H₉)₃NH⁺CO₃²⁻, (C₄H₉)₃NH⁺R¹²O⁻, (C₄H₉)₃NH⁺R¹²COO⁻ wherein R¹² is an alkyl or alkenyl group having 1 to 20 carbon atoms or an aryl group having 6 to 20 carbon atoms.

Primary and secondary amines are less preferable since they may induce reactions other than the polyol curing.

### (c) Quaternary phosphonium salts

A phosphonium ammonium salt of the formula:

PR¹⁰₄X or R¹⁰₃P-R¹¹-PR¹⁰₃·2X

wherein R¹⁰, R¹¹ and X are the same as defined above.

Examples of the phosphonium salts include benzyltriphenylphosphonium chloride, benzyltriphenylphosphonium bromide, methyltriphenylphosphoniummethyl methanephosphonate, bis(benzyldiphenylphophine)iminium chlroide, 2,4-dichlorobenzyltriphenylphosphonium chloride, 4-methylbenzyltriphenylphosphonium chloride, 4-chlorobenzyltriphenylphosphonium chloride, m-trifluoromethylbenzyltriphenylphosphonium chloride, 2-cyanobenzyltriphenylphosphonium chloride, α-carbethoxylbenzyltriphenylphosphonium bromide, diphenylmethyltriphenylphosphonium chloride, 1-naphthylmethyltriphenylphosphonium chloride, carbethoxymethyltriphenylphosphonium bromide, methoxymethyltriphenylphosphonium chloride, allyloxymethyltriphenylphosphonium chloride, 1-carbethoxyethyltriphenylphosphonium chloride, isobutyltriphenylphosphonium bromide, 4-cyanobutyltriphenylphosphonium bromide, 2-pentyltriphenylphosphonium bromide, allyltriphenylphosphonium chloride, tetraphenylphosphonium chloride, tetraphenylphosphonium bromide, methyltrioctylphosphonium chloride, methyltrioctylphosphonium tetrafluoroborate, methyltrioctylphosphonium acetate, methyltrioctylphosphonium dimethylphosphate, benzyltrioctylphosphonium chloride, methoxyethoxyethyltrioctylphosphonium chloride, butyltrioctylphosphonium bromide, m-trifluoromethylbenzyltrioctylphosphonium chloride, 2,2,3,3-tetrafluoropropyltrioctylphosphonium chloride, 2,2,3,3,4,4,5,5-octafluoropenthyltrioctylphosphonium chloride, tetraoctylphosphonium bromide, tetrabutylphosphonium chloride, tetrabutylphosphonium bromide, etc.

### (d) Organic acids

In the present invention, organic acids can be added to the composition to further improve the storage stability.

Organic acids having 1 to 12 carbon atoms, preferably 1 to 4 carbon atoms are used. Organic acids having 13 or more carbon atoms are less preferable, since they remain in the coating films.

Preferable examples of organic acids are monocarboxylic acids such as formic acid, acetic acid, propionic acid, etc.; and dicarboxylic acids such as oxalic acid, malonic acid, succinic acid, etc.

The organic acids suppress the polyol curing of fluorine-containing copolymers in the compositions. However, the organic acids evaporate or decompose when the compositions are applied, dried and baked, and then the basic compound can accelerate the curing reaction. Thus, the organic acid is included in the meaning of the "curing accelerators" according to the present invention.

The composition of the present invention comprises 0.01 to 50 wt. parts, preferably 0.1 to 20 wt. parts of the amine compound, per 100 wt. parts of the fluoroelastomer in the case of the diamine curing, or the composition comprises 0.1 to 20 wt. parts, preferably 1 to 10 wt. parts of the basic polyol curing agent, and 0 to 10 wt. parts, preferably 0.01 to 5 wt. parts of the curing accelerator, per 100 wt. parts of the fluoroelastomer. When the amount of the curing accelerator is less than the above lower limit, the curing may not proceed. When the amount of the curing accelerator exceeds the above upper limit, it may be difficult to control the curing reaction.

The polyol curing agent is preferable from the viewpoint of the storage stability.

The amount of the fluoroelastomer to be contained in the composition of the present invention is from 1 to 500 wt. parts, preferably from 5 to 300 wt. parts, more preferably from 10 to 150 wt. parts, per 100 wt. parts of water.

The composition of the present invention may contain various additives which are added to conventional fluoroelastomer compositions, for example, fillers, colorants, acid-acceptors, and the like, in addition to the above curing agents and curing accelerators.

Examples of the fillers are carbon black, white carbon, calcium carbonate, barium sulfate, etc., and examples of the colorants are inorganic pigments, compound oxide pigments, etc.

Examples of the acid-acceptors are magnesium oxide, lead oxide, zinc oxide, lead carbonate, zinc carbonate, double salts such as hydrotalcite, etc. Compounds having a high activity such as calcium hydroxide are less preferred, since they tend to cause gelation.

Preferably, the acid-acceptors have a smaller pKa than that of the above basic compounds. When the pKa of acid-acceptors is high, the compositions of the present invention tend to be gelled.

In general, the acid-acceptor is compounded in an amount of from 1 to 40 wt. parts per 100 wt. parts of a fluorine-containing copolymer, depending on its activity.

Furthermore, non-stickiness can be imparted to the compositions of the present invention by the compounding of fluororesins or terminal-modified perfluoropolyethers (that is, perfluoropolyether compounds having terminal functional groups reactive with the fluoroelastomers such as -NH₂, -CH₂OH, etc.) in an amount of 5 to 900 wt. parts per 100 wt. parts of the fluoroelastomer.

Examples of the fluororesin include polyvinylidene fluoride (PVdF), ethylene-tetrafluoroethylene copolymers (ETFE), polychlorotrifluoroethylene (PCTFE), tetrafluoroethylene-hexafluoropropylene-perfluoroalkyl vinyl ether copolymers (EPA), tetrafluoroethylene-hexafluoropropylene copolymers (FEP), tetrafluoroethylene-perfluoroalkyl vinyl ether copolymers (PFA), polytetrafluoroethylene (PTFE), etc. Among them, tetrafluoroethylene base polymers are preferable from the viewpoint of the non-stickiness.

The compositions of the present invention may be applied by the same methods as those for applying the conventional aqueous curing composition of the fluoroelastomer. For example, the compositions are applied to an article to be coated by brush coating, spray coating, dip coating, flow coating, dispenser coating, screen coating, etc. according to the properties of the compositions, and thoroughly dried. Then, the compositions coated are baked at a temperature of from 150 to 300°C for 10 to 120 minutes.

Furthermore, a surface layer may be formed on the coating layer formed from the composition of the present invention. The surface layer can be formed from the above fluororesin and/or the above terminal-modified perfluoropolyether by a conventional method.

The surface of the article to be coated is preferably well degreased and cleaned prior to the application of the coating composition.

It is preferable to form a primer layer on the surface of the article with silane primers, silicone primers, etc. to increase the adhesion between the article and the composition.

The aqueous curing composition of the fluoroelastomer according to the present invention has a longer pot life and can provide the cured film with a higher strength than the curing compositions comprising the fluoroelastomers having a large number of terminal functional groups at the ends of the copolymer chains.

Examples of the articles to be coated with the composition of the present invention include metals (e.g. iron, stainless steel, copper, aluminum, brass, etc.), glass products (e.g. such as glass plates, fabric or non-woven fabric of glass fiber, etc.), molded articles and coated articles of general or heat-resistant resins (e.g. polypropylene, polyoxymethylene, polyimide, polyamideimide, polysulfone, polyethersulfone, polyetheretherketone, etc.), molded articles and coated articles of general rubbers (e.g. styrene-butadiene rubber (SBR), butyl rubber, nitrile rubber (NBR), ethylene-propylene rubber (EPDM), etc.) and heat-resistant rubbers (e.g. silicone rubber, fluoroelastomer, etc.), fabric or non-woven fabric of natural and synthetic fibers, and the like.

The articles coated with the film formed from the composition of the present invention can be used in various fields which require heat resistance, solvent resistance, lubrication and/or non-stick properties. Specific examples of the applications include rolls (e.g. fixing rolls, press rolls, etc.) and conveying belts for OA equipment such as copying machines, printers, facsimiles, etc.; sheets andbelts; O-rings, diaphragms, chemical-resistant tubes, fuel hoses, valve seals, gaskets for chemical plants, engine gaskets, and the like.

### EXAMPLES

The present invention will be illustrated by the following examples.

The surface charge density of the particles in the aqueous fluoroelastomer dispersion was measured as follows:

The aqueous fluoroelastomer dispersion was filled in a cylinder of a dialysis film (available from VISKASE SALES CORP.), and the both ends were sealed. Then, it was dipped in ion-exchanged water to perform dialysis. The ion-exchanged water was replaced one every three days at the maximum interval so that impurities such as emulsifiers contained in the dispersion were allowed to pass through the dialysis film. After dialyzing the dispersion for 30 days, the surface charge density of the fluoroelastomer particles was measured with the conductometric titration.

### Example 1

### Preparation of Pigment Paste:

A filler (MT carbon black) (20 wt. parts) and an acid-acceptor (MA-150 available from KYOWA KAGAKU KOGYO Kabushikikaisha) (3 wt. parts) were dispersed in pure water (48 wt. parts) together with a surfactant (a 20 wt. % aqueous solution of HS-208 available from NOF Corporation) (2 wt. parts) to obtain a paste, which will be referred to as "Pigment Paste".

### Preparation of coating composition:

Pigment Paste (73 wt. parts) and a thickening agent (ADECANOL UH-140S available from ASAHI DENKA KOGYO K.K.) (1.5 wt. parts) were added to and well dispersed in Aqueous Dispersion A of a fluoroelastomer (available from Daikin Industries Ltd.; a vinylidene fluoride-tetrafluoroetylene-hexafluoropropylene copolymer; surface charge density of particles: 8.9 x 10⁻⁶ C/cm²) (100 wt. parts of the solid component). Then, to this aqueous dispersion, an alkaline water-soluble phenol resin (DKK-1 available from ASAHI Organic Material Industries Kabushikikaisha) (2.2 wt. parts) and the octylate salt of 1,8-diaza-bicyclo[5.4.0]-7-undecene (DBU) (U-CAT SA102 available from SAN-APRO Co., Ltd.) (0.5 wt. part) as a curing accelerator were added to obtain a coating composition.

### Formation of a coating film:

The coating composition obtained was spray coated on a substrate, sufficiently dried at a temperature of 80 to 100°C, and then baked at 250°C for 30 minutes.

### Long-term stability test:

The coating composition was poured in a polyethylene bottle and kept standing at 25°C. After 2 days, 7 days, 2 weeks, 1 month and 3 months, the state of the coating composition was observed.

### Properties of a coating film:

The adhesion, non-stickiness and tensile properties of a coating film were evaluated as follows:

### <Adhesion property>

On the surface of the coating film, 100 sections of crosshatches were formed according to the definition of JIS K 5400-1990, 8.5.2. To the crosshatched surface, a cellophane adhesive tape (available from NICHIBAN COMPANY, LIMITED) was sufficiently adhered and then immediately peeled off. Using a fresh adhesive tape each time, the peeling was repeated ten times, and the number of the crosshatched sections remaining on the substrate per 100 sections was counted.

As the substrates, an aluminum plate (A-1050), a polyimide film, a silicone rubber sheet (RTV type silicone rubber) and a fluoroelastomer sheet (DAIEL G-716 available from Daikin Industries Ltd.) were used. The aluminum plate was beforehand blasted and coated with a silane compound (a 10 wt. % aqueous solution of LORD Chemlok Y-4310) as a primer. The silicone rubber sheet was coated with GLP-103SR (available from Daikin Industries, Ltd.) as a primer.

### <Non-stick property>

On the surface of the coating film, one drop of pure water or n-cetane was dropped, and a contact angle was measured with a goniometer (available from KYOWA KAIMEN KAGAKU KABUSHIKIKAISHA).

### <Tensile properties>

The coating composition was poured in a metal vat and sufficiently dried at room temperature for 5 days and then at a temperature of 80 to 100°C, followed by baking at 250°C for 30 minutes. The formed film was peeled off from the vat. Then, a JIS No. 5 dumbbell-shaped sample was punched out from the film and subjected to the tensile test at a pulling rate of 500 mm/min., and a tensile stress at 100 % elongation, a tensile strength (at break) and an elongation (at break) were measured.

### Example 2

The same procedures as those in Example 1 were repeated except that, in the preparation of the coating composition, Aqueous Dispersion B of a fluoroelastomer (available from Daikin Industries Ltd.; a vinylidene fluoride-tetrafluoroetylene-hexafluoropropylene copolymer; surface charge density of particles: 9.2 x 10⁻⁶ C/cm²) was used in place of Aqueous Dispersion A.

### Example 3

The same procedures as those in Example 1 were repeated except that, in the preparation of the coating composition, Aqueous Dispersion C of a fluoroelastomer (available from Daikin Industries Ltd.; a vinylidene fluoride-tetrafluoroetylene-hexafluoropropylene copolymer; surface charge density of particles: 9.5 x 10⁻⁶ C/cm²) was used in place of Aqueous Dispersion A.

### Comparative Example 1

The same procedures as those in Example 1 were repeated except that, in the preparation of the coating composition, Aqueous Dispersion D of a fluoroelastomer (available from Daikin Industries Ltd.; a vinylidene fluoride-tetrafluoroetylene-hexafluoropropylene copolymer; surface charge density of particles: 9.7 x 10⁻⁶ C/cm²) was used in place of Aqueous Dispersion A.

### Comparative Example 2

The same procedures as those in Example 1 were repeated except that, in the preparation of the coating composition, Aqueous Dispersion E of a fluoroelastomer (available from Daikin Industries Ltd.; a vinylidene fluoride-tetrafluoroethylene-hexafluoropropylene copolymer; surface charge density of particles: 10 x 10⁻⁶C/cm²) was used in place of Aqueous Dispersion A.

### Example 4

The same procedures as those in Example 1 were repeated except that, in the preparation of the coating composition, 4.4 wt. parts of the alkaline water-soluble phenol resin (DKK-1 available from ASAHI Organic Material Industries Kabushikikaisha) as the curing agent was added.

### Example 5

The same procedures as those in Example 1 were repeated except that, in the preparation of the coating composition, Aqueous Dispersion B of the fluoroelastomer was used in place of Aqueous Dispersion A and 4.4 wt. parts of the alkaline water-soluble phenol resin (DKK-1 available from ASAHI Organic Material Industries Kabushikikaisha) as the curing agent was added.

### Example 6

The same procedures as those in Example 1 were repeated except that, in the preparation of the coating composition, Aqueous Dispersion C of the fluoroelastomer was used in place of Aqueous Dispersion A and 4.4 wt. parts of the alkaline water-soluble phenol resin (DKK-1 available from ASAHI Organic Material Industries Kabushikikaisha) as the curing agent was added.

### Comparative Example 3

The same procedures as those in Example 1 were repeated except that, in the preparation of the coating composition, Aqueous Dispersion D of the fluoroelastomer was used in place of Aqueous Dispersion A and 4.4 wt. parts of the alkaline water-soluble phenol resin (DKK-1 available from ASAHI Organic Material Industries Kabushikikaisha) as the curing agent was added.

### Comparative Example 4

The same procedures as those in Example 1 were repeated except that, in the preparation of the coating composition, Aqueous Dispersion E of the fluoroelastomer was used in place of Aqueous Dispersion A and 4.4 wt. parts of the alkaline water-soluble phenol resin (DKK-1 available from ASAHI Organic Material Industries Kabushikikaisha) as the curing agent was added.

### Example 7

Pigment Paste (73 wt. parts) and a thickening agent (ADECANOL UH-140S available from ASAHI DENKA KOGYO K. K.) (1.5 wt. parts) were added to and well dispersed in Aqueous Dispersion A of the fluoroelastomer (100 wt. parts of the solid). The solid concentration of the fluoroelastomer in this dispersion was 39.3 %. Then, to this aqueous dispersion, an alkaline water-soluble phenol resin (DKK-1 available from ASAHI Organic Material Industries Kabushikikaisha) (2.3 wt. parts) and the octylate salt of DBU (U-CAT SA102 available from SAN-APRO Co., Ltd.) (0.5 wt. part) as a curing accelerator were added to obtain a coating composition.

### Stability test:

Just after the preparation, the coating composition was poured in a polyethylene bottle and kept standing at 25°C for 30 minutes. Then, the state of the coating composition was observed.

### Example 8

The same procedures as those in Example 7 were repeated except that, in the preparation of the coating composition, 9.0 wt. parts of the alkaline water-soluble phenol resin (DKK-1 available from ASAHI Organic Material Industries Kabushikikaisha) as the curing agent was added.

### Example 9

The same procedures as those in Example 7 were repeated except that, in the preparation of the coating composition, Aqueous Dispersion C of the fluoroelastomer was used in place of Aqueous Dispersion A. The solid concentration of the fluoroelastomer in this dispersion was 39.3 %.

### Example 10

The same procedures as those in Example 7 were repeated except that, in the preparation of the coating composition, Aqueous Dispersion C of the fluoroelastomer was used in place of Aqueous Dispersion A and 5.3 wt. parts of the alkaline water-soluble phenol resin (DKK-1 available from ASAHI Organic Material Industries Kabushikikaisha) as the curing agent was added.

### Example 11

The same procedures as those in Example 7 were repeated except that, in the preparation of the coating composition, Aqueous Dispersion C of the fluoroelastomer was used in place of Aqueous Dispersion A and 6.3 wt. parts of the alkaline water-soluble phenol resin (DKK-1 available from ASAHI Organic Material Industries Kabushikikaisha) as the curing agent was added.

### Comparative Example 5

The same procedures as those in Example 7 were repeated except that, in the preparation of the coating composition, Aqueous Dispersion E of a fluoroelastomer (available from Daikin Industries Ltd.; a vinylidene fluoride-tetrafluoroethylene-hexafluoropropylene copolymer; surface charge density of particles: 10 x 10⁻⁶ C/cm²) was used in place of Aqueous Dispersion A. The solid concentration of the fluoroelastomer in this dispersion was 39.3 %.

### Comparative Example 6

The same procedures as those in Example 7 were repeated except that, in the preparation of the coating composition, Aqueous Dispersion F of a fluoroelastomer (available from Daikin Industries Ltd.; a vinylidene fluoride-tetrafluoroethylene-hexafluoropropylene copolymer; surface charge density of particles: 10 x 10⁻⁶ C/cm²) was used in place of Aqueous Dispersion A and 3.2 wt. parts of the alkaline water-soluble phenol resin (DKK-1 available from ASAHI Organic Material Industries Kabushikikaisha) as the curing agent was added. The solid concentration of the fluoroelastomer in this dispersion was 28.7 %.

### Comparative Example 7

The same procedures as those in Example 7 were repeated except that, in the preparation of the coating composition, Aqueous Dispersion F of the fluoroelastomer was used in place of Aqueous Dispersion A and 5.8 wt. parts of the alkaline water-soluble phenol resin (DKK-1 available from ASAHI Organic Material Industries Kabushikikaisha) as the curing agent was added.

### Comparative Example 8

The same procedures as those in Example 7 were repeated except that, in the preparation of the coating composition, Aqueous Dispersion G of a fluoroelastomer (available from Daikin Industries Ltd.; a vinylidene fluoride-tetrafluoroethylene-hexafluoropropylene copolymer; surface charge density of particles: 10 x 10⁻⁶ C/cm²) was used in place of Aqueous Dispersion A and 5.8 wt. parts of the alkaline water-soluble phenol resin (DKK-1 available from ASAHI Organic Material Industries Kabushikikaisha) as the curing agent was added. The solid concentration of the fluoroelastomer in this dispersion was 22.2 %.

The results obtained in Examples and Comparative Examples are shown in Tables 1, 2 and 3.

**Table 1**

| | Ex. 1 | Ex. 2 | Ex. 3 | C. Ex. 1 | C. Ex. 2 |
|---|---|---|---|---|---|
| Surface charge density of particles in dispersion (C/cm²) | 8.9 x 10⁻⁶ | 9.2 x 10⁻⁶ | 9.5 x 10⁻⁶ | 9.7 x 10⁻⁶ | 10 x 10⁻⁶ |
| Amount of curing agent*¹ | 2.2 | 2.2 | 2.2 | 2.2 | 2.2 |
| Long-term stability (standing still) | No change after 3 months | No change after 3 months | Gelled after 1 month | Gelled after 2 weeks | Gelled after 2 weeks |
| Adhesion property (crosshatch test) | | | | | |
| Substrate: | | | | | |
| -Aluminum | 100/100 | 100/100 | 100/100 | 100/100 | 100/100 |
| -Polyimide | 100/100 | 100/100 | 100/100 | 100/100 | 100/100 |
| -Silicone rubber | 100/100 | 100/100 | 100/100 | 100/100 | 100/100 |
| -Fluoroelastomer | 100/100 | 100/100 | 100/100 | 100/100 | 100/100 |
| Non-stickiness (contact angle: degrees) | | | | | |
| -Pure water | 94 | 94 | 93 | 93 | 94 |
| -n-Cetane | 40 | 39 | 40 | 39 | 39 |
| Tensile properties | | | | | |
| -100 % tensile stress (kgf/cm²) | 20 | 20 | 20 | 20 | 20 |
| -Tensile strength at break (kgf/cm²) | 90 | 90 | 80 | 80 | 80 |
| -Elongation at break (%) | 550 | 560 | 590 | 610 | 620 |

| | | | | | |
|---|---|---|---|---|---|
| Note: *1) Weight parts per 100 wt. parts of the fluoroelastomer in terms of a solid. | | | | | |

**Table 2**

| | Ex. 4 | Ex. 5 | Ex. 6 | C. Ex. 3 | C. Ex. 4 |
|---|---|---|---|---|---|
| Surface charge density of particles in dispersion (C/cm²) | 8.9 x 10⁻⁶ | 9.2 x 10⁻⁶ | 9.5 x 10⁻⁶ | 9.7 x 10⁻⁶ | 10 x 10⁻⁶ |
| Amount of curing agent*¹ | 4.4 | 4.4 | 4.4 | 4.4 | 4.4 |
| Long-term stability (standing still) | No change after 3 months | Immediately gelled | Immediately gelled | Immediately gelled | Immediately gelled |
| Adhesion property (crosshatch test) | | | | | |
| Substrate: | | | | | |
| -Aluminum . | 100/100 | --- | --- | --- | --- |
| -Polyimide | 100/100 | --- | --- | --- | --- |
| -Silicone rubber | 100/100 | --- | --- | --- | --- |
| -Fluoroelastomer | 100/100 | --- | --- | --- | --- |
| Non-stickiness (contact angle: degrees) | | | | | |
| -Pure water | 95 | --- | --- | --- | --- |
| -n-Cetane | 40 | --- | --- | --- | --- |
| Tensile properties | | | | | |
| -100 % tensile stress (kgf/cm²) | 30 | --- | --- | --- | --- |
| -Tensile strength at break (kgf/cm²) | 110 | --- | --- | --- | --- |
| -Elongation at break (%) | 410 | --- | --- | --- | --- |

| | | | | | |
|---|---|---|---|---|---|
| Note: *1) Weight parts per 100 wt. parts of the fluoroelastomer in terms of a solid. | | | | | |

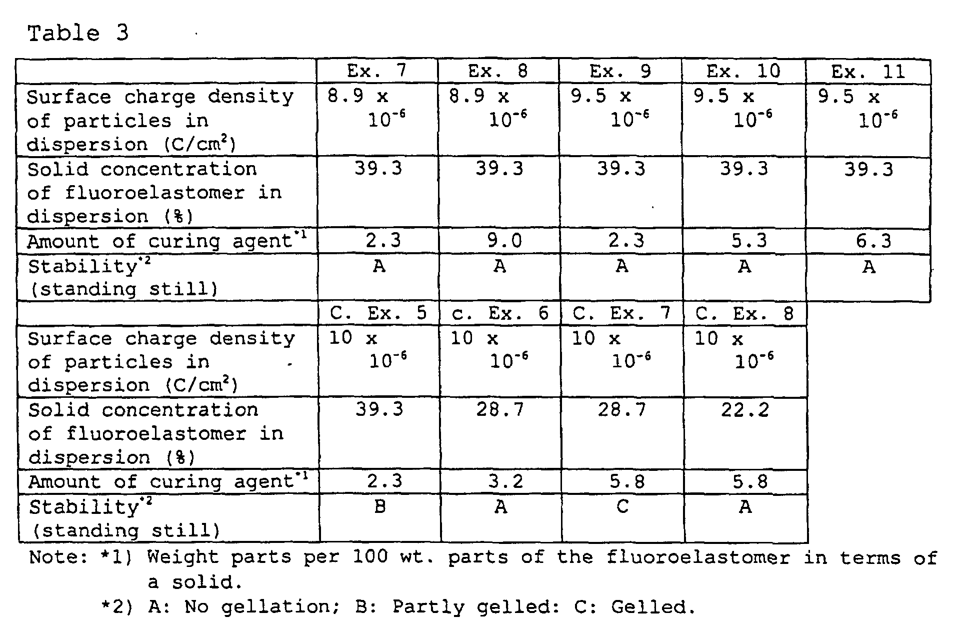

## Claims

1. An aqueous curing composition of a fluoroelastomer comprising water, a fluoroelastomer at least a part of terminal groups of which are non-functional groups, and a curing agent.

2. The aqueous curing composition according to claim 1, wherein said fluoroelastomer has a surface charge density of the particles of 9.6 x 10⁻⁶ C/cm² or less.

3. The aqueous curing composition according to claim 1, wherein said non-functional group is a group of the formula:
-CR¹R²R³
wherein R¹, R² and R³ represent independently each other a hydrogen atom, a halogen atom, an alkyl group having 1 to 5 carbon atoms or a perfluoroalkyl group having 1 to 5 carbon atoms, or a group of the formula:
-COOR⁴
wherein R⁴ is an alkyl group having 1 to 5 carbon atoms.

4. The aqueous curing composition according to claim 1 or 2, wherein said fluoroelastomer is an elastomeric copolymer comprising vinylidene fluoride and at least one other fluorine-containing ethylenically unsaturated monomer copolymerizable with vinylidene fluoride.

5. The aqueous curing composition according to any one of claims 1 to 4 which further comprises at least one polymer component selected from the group consisting of fluororesins and terminal-modified perfluoropolyethers.

6. An article at least a part of the surface of which is coated with a coating layer formed from the aqueous curing composition of a fluoroelastomer according to any one of claims 1 to 5.

7. The article according to claim 6, which is a roll for office automation equipment.
